# EUROPÄISCHE PATENTSCHRIFT

(11) **EP 1 451 485 B1**
(45) Veröffentlichungstag und Bekanntmachung des Hinweises auf die Patenterteilung: **14.06.2006**
(21) Anmeldenummer: 02774243.6
(22) Anmeldetag: 19.11.2002
(51) Int. Cl.: F16G 11/00, D07B 1/02, B60G 7/00

(54) **SICHERHEITSFANGSEIL**
SAFETY ARRESTER CABLE
CABLE D'ARRET DE SECURITE

(30) Priorität: 05.12.2001 CH 22202001
(43) Veröffentlichungstag der Anmeldung: 01.09.2004
(73) Patentinhaber: Cortex Hümbelin AG, 5102 Rupperswil (CH)
(72) Erfinder: NÜESCH, Walter, CH-9212 Arnegg (CH)
(74) Vertreter: Schneider Feldmann AG Patent- und Markenanwälte
(86) Internationale Anmeldenummer: PCT/CH2002/000623
(87) Internationale Veröffentlichungsnummer: WO 2003/048602

(56) Entgegenhaltungen:
- DE-A- 3 903 082
- FR-A- 1 376 395
- GB-A- 2 327 649
- US-A- 2 347 229
- US-A- 4 155 394
- US-A- 4 563 869
- E.R.BARRON: "Hybrid Tire Cords Containing Kevlar Aramid" KAUTSGUK UND GUMMI-KUNSTSTOFFE, Bd. 40, Nr. 2, 1987, Seiten 130-135, XP002232349 Heidelberg in der Anmeldung erwähnt
- DATABASE WPI Week 9515 Derwent Publications Ltd., London, GB; AN 1995-111118 XP002232350 & JP 07 034344 A (KANEBO), 3. Februar 1995 (1995-02-03)

## Beschreibung

Die vorliegende Erfindung betrifft ein Sicherheitsfangseil bestehend aus einem aus hochfesten Kunststofffasern gefertigten Seil und daran befestigten Einhängeösen aus Metall.

Sicherheitsfangseile werden in der Technik dort eingesetzt, wo an sich starre Verbindungen unter gewissen Bedingungen zerstört werden können und sichergestellt werden soll, dass der abgebrochene Teil nicht unkontrolliert wegfliegen kann und dadurch zu grösseren Schäden beziehungsweise zu Gefährdung von Personen führt.

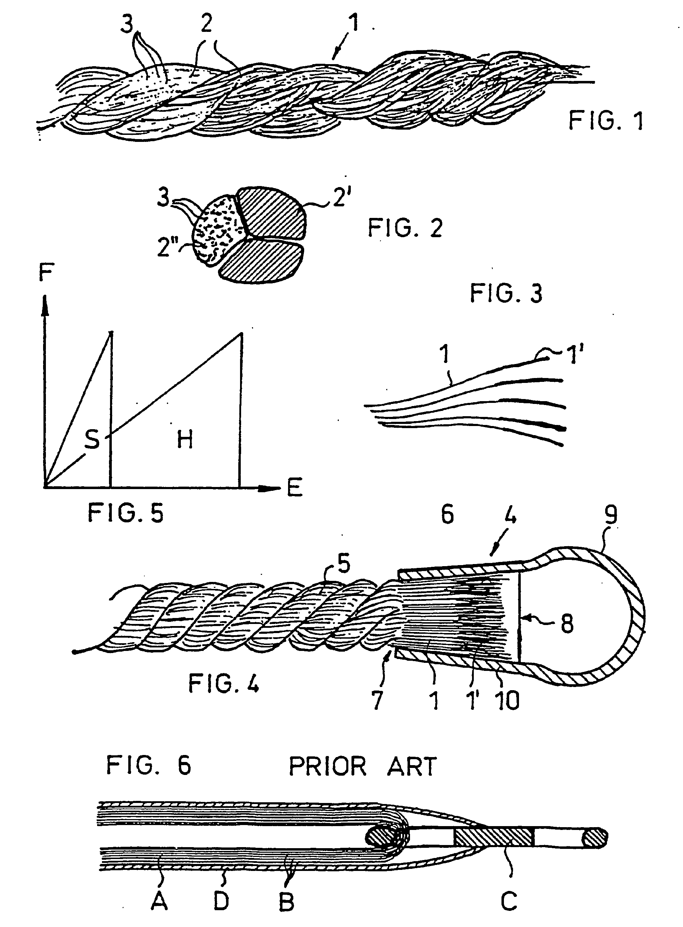

Im Automobilrennsport kommt es bekanntlich immer wieder vor, dass bei Kollisionen zweier Fahrzeuge oder eines Fahrzeuges mit der Pistenberandung die Radachsen und deren Aufhängung brechen und das Rad unkontrolliert wegfliegt oder wegkatapultiert wird. Hierdurch sind schon öfters Personen am Pistenrand verletzt oder gar getötet worden. Dieses Problem ist bekannt und man hat entsprechend Vorschriften erlassen, dass Räder mit dem Fahrzeugkörper über ein Sicherheitsfangseil verbunden sein müssen. Durch diese Sicherheitsmassnahme sind auch bisher bereits vielfach schwerere Unfälle vermieden worden, doch die bisher eingesetzten Sicherheitsfangseile haben trotz allem noch immer eine ungenügende Wirkung.
Aus der GB-A-2327649 ist es bekannt, bei Automobilrennwagen ein Sicherheitsfangseil in Druckstäbe integriert anzuwenden, wobei die Druckstäbe einen Teil der "work-to-break-energy" aufnehmen.
Heute sind Fasern beziehungsweise daraus gefertigte Garne auf dem Markt, die eine mehrfach höhere Reissfestigkeit aufweisen als Stahlfasern. Während beispielsweise Stahlfasern eine Reissfestigkeit von 3.0 cN/dtex aufweisen, haben Karbonfasern eine Reissfestigkeit von 20 cN/dtex. Auch die relativ elastischen m-Aramid-Fasern haben eine Reissfestigkeit von 4.7 cN/dtex, während die starren p-Aramid-Fasern eine Reissfestigkeit von 19 cN/dtex und die modernen PBO-Fasern gar eine Reissfestigkeit von rund 37 cN/dtex aufweisen. Sicherheitsfangseile, die aus diesen modernen hochreissfesten Fasern, wie Karbonfasern, p-Aramid-Fasern und PBO-Fasern, hergestellt sind, vermögen Zugkräfte aufzunehmen, die die tatsächlich auftretenden Kräfte bei weitem übertreffen.
Entsprechend sind solche Sicherheitsfangseile aus entsprechenden hochreissfesten Fasern hergestellt worden, wobei man entsprechende Garne aus solchen hochreissfesten Fasern endlos zwischen den beiden endseitigen Einhängeösen gewickelt hat. Die entsprechenden Fasern verlaufen folglich allesamt parallel zueinander. Bei den bisher untersuchten Unfällen konnte festgestellt werden, dass das Seil zwischen den beiden Einhängeösen den aufgetretenen Kräften standgehalten hat, während die Einhängeösen gebrochen sind. Der Aufbau eines solchen Sicherheitsfangseiles gemäss dem Stand der Technik ist in der Figur 6 dargestellt. Das eigentliche Seil A ist aus mehreren endlos gewundenen Schlaufen B gefertigt und läuft durch eine hier rein schematisch dargestellte Einhängeöse C. Ueber das Seil A ist ein Schrumpfschlauch D angebracht. Wie bereit erwähnt, sind die aufgetretenen Brüche immer an der Einhängeöse festgestellt worden. Dies ist auch nicht verwunderlich, da die hochreissfesten Materialien üblicherweise eine Dehnung bis zur Bruchverlängerung von 1.5 bis maximal 3.5 Prozent aufweisen. Im Prinzip könnte dies kompensiert werden, indem man entsprechend lange Sicherheitsfangseile herstellen würde. Dies ist jedoch nicht gangbar, da hierdurch die Gefahr gegeben wäre, dass das am Fangseil hängende Rad den Piloten erschlagen könnte. Hinzu kommt, dass gerade im Automobilrennsport ein möglichst leichtes Sicherheitsfangseil mit geringst möglichem Luftwiderstand erwünscht ist. Es ist somit auch keine Lösung, Sicherheitsfangseile aus weniger hochfestem dafür elastischerem Material zu fertigen und das Seil entsprechend dicker zu gestalten.

Das Problem lässt sich lediglich dadurch lösen, dass das Seil und die Einhängeöse als ein zusammengehöriges System betrachtet wird, wobei dieses System die bestmögliche Energieaufnahme (Work-to-break-Energy) aufweisen muss.

In einem Artikel beschreibt E.R. Barron "Hybrid Tyre Cords Containing Kevlar Aramid" (Kautschuk + Gummi · Kunststoffe, Vol. 40, 1987, Nr. 2, Seiten 130-135) die Vorteile von dreilagigen sogenannten Hybridseilen, die aus Kombinationen von Aramid mit Nylon, Polyester oder anderen textilen Garnen gefertigt sind. Gegenüber reinen Aramidgarnen weisen solche Hybridgarne eine verbesserte Elastizität und einen erhöhten Müdigkeitsbruchwiderstand auf. Diese Erkenntnisse sind in der Reifenfertigungstechnologie heute nicht nur im Motorrennsport realisiert.

Es ist die Aufgabe der vorliegenden Erfindung, ein Sicherheitsfangseil der eingangs genannten Art so zu verbessern, dass die Energieaufnahme (Work-to-break-Energy) des gesamten Systems des Sicherheitsfangseiles wesentlich erhöht wird und damit die Gefahr eines Bruches des Sicherheitsfangseiles wesentlich reduziert werden kann.

Die erste Teilaufgabe löst ein Sicherheitsfangseil mit den Merkmalen des Patentanspruches 1, während die zweite Teilaufgabe in Kombination mit Anspruch 2 gelöst wird. Weitere vorteilhafte Ausgestaltungsformen des Erfindungsgegenstandes gehen aus den abhängigen Ansprüchen hervor, deren Bedeutung und Wirkung in der nachfolgenden Beschreibung unter Bezug auf die Figuren erläutert ist.

In der anliegenden Zeichnung ist eine bevorzugte Ausführungsform des Erfindungsgegenstandes dargestellt und nachfolgend erläutert. Es zeigt:
- Figur 1: eine Ansicht eines in Z-Zwirnung erstellten Hybridgarnes und
- Figur 2: einen Schnitt durch das Hybridmischgarn gemäss der Figur 1.
- Figur 3: zeigt systematisch die Garnenden eines entzwirnten Seiles, die mit einer Harzbeschichtung verdickt sind. In
- Figur 4: ist das Ende eines erfindungsgemässen Sicherheitsfangseiles gezeigt, wobei die Einhängeöse längs geschnitten ist.
- Figur 5: zeigt ein Diagramm mit der Energieaufnahme in Abhängigkeit der Zeit, während
- Figur 6: schematisch ein bekanntes Sicherheitsfangseil gemäss Stand der Technik zeigt, wie es heute im Automobilrennsport eingesetzt wird.

Figur 1 zeigt eine Ansicht eines Hybridmischgarnabschnittes. Der Garnabschnitt ist insgesamt mit 1 bezeichnet. Er besteht aus mehreren verzwirnten Fäden 2, wobei jeder Faden 2 aus einem Büschel von unverzwirnten Filamenten 3 besteht. In der Schnittzeichnung gemäss der Figur 2 erkennt man, dass zwei Fäden 2' aus hochreissfesten, relativ starren Filamenten 2' bestehen, während ein Faden 2" aus weniger reissfestem, jedoch elastischem Material gefertigt ist.

Bei den Fäden 2', die aus relativ starren Kunststofffilamenten gefertigt sind, handelt es sich um Kunststofffilamente aus der Auswahl von PBO (poly-p-phenylene-2,6-benzobisoxazole), Karbonfasern und p-Aramiden. Im Gegensatz dazu steht der Faden 2" aus Filamenten aus relativ elastischem Material aus der Auswahl von m-Aramiden, PBI, Polyurethan (Elastan) und Polyester.

Solche PBO-Fasern werden unter der Warenbezeichnung Zylon® der Firma Toyobo Co., Ltd. in Osaka, Japan angeboten. Wie bereits eingangs erwähnt, weisen diese relativ starren Materialien eine Reissfestigkeit zwischen 19 bis 37 cN/dtex auf. Der elastische Faden 2" besteht vorzugsweise aus der Auswahl von m-Aramiden, PBI und Polyester, die demgegenüber eine Reissfestigkeit von 2.7 bis 8 cN/dtex aufweisen. Die Fäden 2 können in einer S-Zwirnung verzwirnt sein, bei denen die Filamente parallel zur Verlaufsrichtung der Fäden verlaufen, oder in Z-Richtung gezwirnt werden (Z-Zwirnung). Wesentlich ist jedoch, dass das Garn beziehungsweise die Garnstränge beruhigt gezwirnt sind (balanced twist), was eine hohe Reissfestigkeit sicherstellt, während das aus diesem Garn beziehungsweise diesen Garnsträngen gefertigte Seil nichtberuhigt gezwirnt (unbalanced twist) ist, da dies eine zusätzliche Dehnwirkung erzielt.

Unter die beruhigte Zwirnung fällt auch die sogenannte O-Zwirnung (Null-Zwirnung). Dabei wird der ungezwirnte Faden nicht Überkopf abgezogen, sondern annähernd spannungsfrei und umlenkungsfrei zugeführt. Die übliche Überkopf-Zuführung bewirkt normalerweise einen Zug, der zu einer unkontrollierten leichten Zwirnung führt, so dass keine beruhigte "balanced" Zwirnung mehr vorliegen würde.

Aus dem Garn gemäss den Figuren 1 und 2 wird ein Seil gemäss der Figur 4 gezwirnt. Dieses Seil wird vorzugsweise in einer Z-Zwirnung gefertigt. Bei der Z-Zwirnung verlaufen die Garne nicht parallel zur Garnlängsrichtung, sondern parallel zur Seillängsrichtung. Während bei der S-Zwirnung, wie in der Figur 1, eine erhöhte Kraftübertragung von den starren Fäden 2' auf die elastischen Fäden 2" erfolgt, wobei praktisch ein Garn entsteht, das die physikalischen Eigenschaften der Mischung aufweist, stellt die Z-Zwirnung die Beibehaltung der Eigenschaften des Mischgarnes sicher. Mit der Wahl der Zwirnung lassen sich die Endeigenschaften des Seiles dem Anwendungsprofil anpassen.

Dank der besonderen Gestaltung des Seiles selber ist somit trotz enorm hoher Reissfestigkeit eine erhöhte Dehnung erzielt, wodurch eine verbesserte Energieaufnahme (Work-to-break-Energy) erzielt ist. Diesbezüglich wird auf das Diagramm in Figur 5 verwiesen. Hier ist auf der Abszisse die Kraft F und auf der Ordinate die Elastizität E aufgezeichnet. Die jeweils schraffierten Flächen stellen die mögliche Energieaufnahme bis zum Bruch dar. Während die kleine Fläche S beispielsweise die Work-to-break-Energy von Stahl (S) zeigt, symbolisiert die Fläche H die Work-to-break-Energy der hier gewählten Hybridkonstruktion. Dies lässt sich jedoch nur dadurch erreichen, dass auch die Einhängeöse 4 entsprechend gestaltet ist, sowie auch die Aufnahme des Seiles 5 in der Einhängeöse 4. Die Einhängeöse 4 hat einen konischen Rohrabschnitt 6, der beidseitig offen ist. Die Oeffnung 7 mit dem kleineren Durchmesser liegt zum Seil hin, während die Oeffnung 8 mit dem grösseren Durchmesser dem Seil abgelegen ist. Ueber der Oeffnung 8 mit dem grösseren Durchmesser ist ein Einhängebügel 9 vorhanden. Der Einhängebügel 9 kann einstückig mit dem konischen Rohrabschnitt 6 gefertigt sein oder mit diesem schweissverbunden. Die gesamte Einhängeöse 4 wird aus einem gehärteten Stahl gefertigt, der zusätzlich mit einer Vakuumlötschicht gehärtet sein kann.

Zur Befestigung des Seiles 5 in der Einhängeöse 4 ist das offene Ende des Seiles 5 in diesem Bereich entzwirnt und die Enden 1' der Garnabschnitte in einem härtenden Harz getränkt. Hierdurch sind die Enden 1' verdickt. Entsprechend ist das Ende des Seiles 5 dicker als das Seil selber. Dieses verdickte Ende des Seiles 5 verkeilt sich durch Zug im konischen Rohrabschnitt 6 der Einhängeöse 4.

Kommt das erfindungsgemässe Sicherheitsfangseil durch eine Zerstörung der an sich starr verbundenen Teile zur Wirkung, so wird nun im ersten Moment ein Teil der Energie durch die Dehnung des Seiles 5 aufgenommen. Auch der Uebergang der Kräfte vom Seil auf die Einhängeöse 4 erfolgt nun mit einer gewissen Elastizität, bei der Verformungsarbeit verrichtet wird und die Energiespitze verflacht wird. Hierbei werden die zwischen den verdickten Garnenden 1' verbleibenden Zwischenräume bei der Verkeilung vernichtet und gleichzeitig das Harz hochkomprimiert. Erst wenn diese Verformungsarbeit geleistet ist liegt die volle Restkraft auf die eigentliche Einhängeöse 4 an.

Um die Work-to-break-Energy weiter zu erhöhen ist es möglich, die Innenfläche des konischen Rohrabschnittes 6 mit einer Beschichtung 10 zu versehen. Eine solche Beschichtung kann beispielsweise aus einer dünnen Schicht aus Kunststoff oder vulkanisiertem Kautschuk bestehen.

Während die vorliegende Erfindung hier vorzugsweise in der Verwendung im Automobilrennsport zur Sicherung der Räder bei einem Achsenbruch beschrieben ist, sind weitere Anwendungen in der Technik absolut denkbar. Beispielsweise wäre eine Verwendung bei Anhängerkupplungen möglich.

### Liste der Bezugszahlen

- 1: Garnabschnitt
- 2: Fäden
- 3: Büschel unverzwirnter Filamente
- 4: Einhängeöse
- 5: Seil
- 6: Konischer Rohrabschnitt
- 7: Oeffnung mit kleinem Durchmesser
- 8: Oeffnung mit grossem Durchmesser
- 9: Einhängebügel
- 10: Beschichtung

## Patentansprüche

1. Sicherheitsfangseil bestehend aus einem aus hochfesten Kunststofffasern gefertigten Seil und daran befestigten Einhängeösen aus Metall, **dadurch gekennzeichnet, dass** das Seil aus einem Mischgarn aus Fäden mit relativ starren Kunststofffilamenten mit einer Dehnung bis zur Bruchverlängerung von 2 bis 5% und aus relativ elastischen Kunststofffilamenten mit einer Dehnung bis zur Bruchverlängerung von 12 bis 25% gezwirnt ist, wobei die Garnstränge beruhigt gezwirnt sind, während das aus diesen Garnsträngen gefertigte Seil nicht beruhigt gezwirnt ist.

2. Sicherheitsfangseil nach Anspruch 1, **dadurch gekennzeichnet, dass** die Enden der Fäden oder die Garnstrangenden mit einer Beschichtung versehen sind und so ein gegen die offenen Enden sich verdickendes Seil gebildet ist, wobei diese beiden Enden in Einhängeösen formschlüssig gehalten sind.

3. Sicherheitsfangseil nach Anspruch 1, **dadurch gekennzeichnet, dass** die relativ starren Kunststofffilamente aus der Auswahl von Poly-p-phenylene-2,6-benzobisoxazole, Karbonfasern und p-Aramiden bestehen.

4. Sicherheitsfangseil nach Anspruch 1, **dadurch gekennzeichnet, dass** die relativ elastischen Kunststofffilamente aus der Auswahl von m-Aramiden, PBI, Polyurethan und Polyester bestehen.

5. Sicherheitsfangseil nach Anspruch 1, **dadurch gekennzeichnet, dass** die Mischgarnfäden in Z-Zwirnung, S-Zwirnung oder O-Zwirnung zu Schnüren gezwirnt und diese Schnüre zu einem Seil gezwirnt sind.

6. Sicherheitsfangseil nach Anspruch 2, **dadurch gekennzeichnet, dass** die Beschichtung der Fäden im Endbereich durch Tränken der Fäden in härtendem Harz oder Mischungen erfolgt.

7. Sicherheitsfangseil nach Anspruch 2, **dadurch gekennzeichnet, dass** die Einhängeösen als konische Rohrabschnitte gestaltet sind, wobei die Oeffnung mit dem kleineren Durchmesser jeweils zur Seilmitte hin gerichtet ist und ein Einhängebügel die weitere Oeffnung überspannt.

8. Sicherheitsfangseil nach Anspruch 7, **dadurch gekennzeichnet, dass** die Einhängeösen auf der Innenseite des konischen Rohrabschnittes mit einer elastischen die Reibung vergrössernden Beschichtung versehen ist.

9. Sicherheitsfangseil nach Anspruch 8, **dadurch gekennzeichnet, dass** die Beschichtung eine aufvulkanisierte Gummischicht ist.

10. Sicherheitsfangseil nach Anspruch 1, **dadurch gekennzeichnet, dass** die Einhängeöse durch Aufbringung einer Vakuumlötschicht gehärtet ist.

11. Sicherheitsfangseil nach Anspruch 1, **dadurch gekennzeichnet, dass** das Seil mit einer Aussenumflechtung versehen ist.

## Claims

1. A safety arrester cable consisting of a cable manufactured of high-strength synthetic fibres and attachment eyes of metal fastened thereto, **characterised in that** the cable is twisted from a blended yard of threads with relatively rigid synthetic filaments with an extension until breakage of 2 to 5%, and of relatively elastic synthetic filaments with an extension until breakage of 12 to 25%, wherein the yarn strands are twisted in a balanced manner whilst the cable manufactured from these yam strands is twisted in an unbalanced manner.

2. A safety arrester cable according to claim 1, **characterised in that** the ends of the threads or the yam strand ends are provided with a coating and thus a cable which thickens towards the open ends is formed, wherein these two ends are held with a positive fit in attachment eyes.

3. A safety arrester cable according to claim 1, **characterised in that** the relatively rigid synthetic filaments consist of a selection of poly-p-phenylene-2,6-benzobisoxazole, carbon fibres and p-aramides.

4. A safety arrester cables according to claim 1, **characterised in that** the relatively elastic synthetic filaments consist of a selection of m-aramides, PBI, polyurethane and polyester.

5. A safety arrester cable according to claim 1, **characterised in that** the blended yarn threads are twisted with a Z-twist, S-twist or O-twist into cords and these cords are twisted into a cable.

6. A safety arrester cable according to claim 2, **characterised in that** the coating of the threads in the end region is effected by immersing the threads in a hardening resin or mixtures.

7. A safety arrester cable according to claim 2, **characterised in that** the attachment eyes are formed as conical tube sections, wherein the opening with the smaller diameter in each case is directed towards the middle of the cable, and an attachment bow spans the further opening.

8. A safety arrester cable according to claim 7, **characterised in that** the attachment eyes on the inner side of the conical tube section are provided with a coating which increases the friction.

9. A safety arrester cable according to claim 8, **characterised in that** the coating is a rubber layer which has been vulcanised on

10. A safety arrester cable according to claim 1, **characterised in that** the attachment eye is hardened by depositing a vacuum solder layer.

11. A safety arrester cable according to claim 1, **characterised in that** the cable is provided with an outer braiding.

## Revendications

1. Câble d'arrêt de sécurité constitué d'un câble fabriqué en fibres synthétiques à haute-résistance et d'oeillets d'accrochage en métal accrochés à celui-ci, **caractérisé en ce que** le câble est retordu à partir d'un filé de mélange de fils avec des filaments synthétiques relativement rigides ayant une extension jusqu'à la rupture de 2 à 5 % et de filaments synthétiques relativement élastiques ayant une extension jusqu'à la rupture de 12 à 25 %, les torons étant retordus d'une manière équilibrée, alors que le câble fabriqué à partir de ces torons est retordu d'une manière non équilibrée.

2. Câble d'arrêt de sécurité selon la revendication 1, **caractérisé en ce que** les extrémités des fils ou les extrémités des torons sont munies d'un revêtement et ainsi un câble s'épaississant vers les extrémités ouvertes est formé, ces deux extrémités étant maintenues à engagement positif dans les oeillets d'attachement.

3. Câble d'arrêt de sécurité selon la revendication 1, **caractérisé en ce que** les filaments synthétiques relativement rigides sont constitués d'une sélection de Poly-p-phenylène-2,6-benzobisoxazole, fibres de carbone et p-Aramides.

4. Câble d'arrêt de sécurité selon la revendication 1, **caractérisé en ce que** les filaments synthétiques relativement élastiques sont constitués d'une sélection de m-aramides, PBI, Polyuréthane et Polyester.

5. Câble d'arrêt de sécurité selon la revendication 1, **caractérisé en ce que** les fils du filé de mélange sont retordus avec une torsion en Z, en S ou en O en un cordon et ces cordons sont retordus en un câble.

6. Câble d'arrêt de sécurité selon la revendication 2, **caractérisé en ce que** le revêtement des fils dans la région d'extrémité résulte de l'immersion des fils dans des mélanges ou une résine durcissante.

7. Câble d'arrêt de sécurité selon la revendication 2, **caractérisé en ce que** les oeillets d'attachements sont formés comme des sections de tube conique, l'ouverture avec le plus petit diamètre étant dirigée à chaque fois vers le milieu du câble et une pièce courbe d'attachement étant tendue sur l'autre ouverture.

8. Câble d'arrêt de sécurité selon la revendication 7, **caractérisé en ce que** les oeillets d'attachement sont munis sur le côté intérieur de la section de tube conique d'un revêtement élastique qui augmente la friction.

9. Câble d'arrêt de sécurité selon la revendication 8, **caractérisé en ce que** le revêtement est une couche de caoutchouc vulcanisée dessus.

10. Câble d'arrêt de sécurité selon la revendication 1, **caractérisé en ce que** l'oeillet d'attachement est durci par le dépôt d'une couche de brasure sous vide.

11. Câble d'arrêt de sécurité selon la revendication 1, **caractérisé en ce que** le câble est muni d'une tresse extérieure.
